# EUROPÄISCHE PATENTSCHRIFT

(11) **EP 2 668 006 B1**
(45) Veröffentlichungstag und Bekanntmachung des Hinweises auf die Patenterteilung: **01.11.2017**
(21) Anmeldenummer: 11807945.8
(22) Anmeldetag: 27.12.2011
(51) Int. Cl.: B24B 45/00

(54) **WERKZEUGSPANNVORRICHTUNG**
TOOL CLAMPING FIXTURE
DISPOSITIF DE SERRAGE D'OUTIL

(30) Priorität: 25.01.2011 DE 102011003098
(43) Veröffentlichungstag der Anmeldung: 04.12.2013
(73) Patentinhaber: Robert Bosch GmbH, 70442 Stuttgart (DE)
(72) Erfinder: LUESCHER, Bruno, CH-4800 Zofingen (CH)
(86) Internationale Anmeldenummer: PCT/EP2011/074108
(87) Internationale Veröffentlichungsnummer: WO 2012/100895

(56) Entgegenhaltungen:
- EP-A1- 2 213 419

## Beschreibung

### Stand der Technik

Die Druckschrift EP 2 213 419 A1 offenbart eine Werkzeugspannvorrichtung mit einer Spanneinheit zum Festspannen eines Bearbeitungswerkzeugs in einer Axialrichtung mit einer Bedieneinheit zur Betätigung der Spanneinheit und mit einer Rückstelldämpfungseinheit, die dazu vorgesehen ist, eine Rückstellbewegung des Bedienhebels zu dämpfen.

### Offenbarung der Erfindung

Die vorliegende Erfindung hat den Vorteil, einen hohen Bedienkomfort der Werkzeugspannvorrichtung zu erreichen. Um den genannten Vorteil zu erreichen wird vorgeschlagen, dass die Rückstelldämpfungseinheit dazu vorgesehen ist, in entgegengesetzt gerichtete Bewegungsrichtungen der Bedieneinheit unterschiedlich große Reibmomente zu erzeugen. In diesem Zusammenhang soll der Begriff "vorgesehen" speziell ausgestattet und/oder speziell ausgelegt definieren. Unter einer "Spanneinheit" soll hier insbesondere eine Einheit verstanden werden, die ein Bearbeitungswerkzeug mittels eines Formschlusses und/oder mittels eines Kraftschlusses entlang der Axialrichtung sichert, insbesondere an einer Werkzeugaufnahme einer tragbaren Werkzeugmaschine. Bevorzugt wirkt in einem Spannmodus der Spanneinheit eine Spannkraft entlang der Axialrichtung auf das Bearbeitungswerkzeug. Der Begriff "Axialrichtung" soll hier insbesondere eine Richtung definieren, die bevorzugt zumindest im Wesentlichen parallel zu einer Schwenkachse und/oder Rotationsachse einer zum Antrieb des Bearbeitungswerkzeugs vorgesehenen Antriebswelle und/oder Spindel einer tragbaren Werkzeugmaschine verläuft. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Begriff "Bedieneinheit" soll hier insbesondere eine Einheit definieren, die zumindest ein Bedienelement aufweist, das direkt von einem Bediener betätigbar ist, und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern.

Unter einer "Rückstelldämpfungseinheit" soll hier insbesondere eine Einheit verstanden werden, die gezielt dazu vorgesehen ist, eine Energieform, insbesondere eine Bewegungsenergie eines Bedienhebels der Bedieneinheit, in zumindest einem Betriebszustand in eine andere Energieform, insbesondere eine Wärmeenergie, umzuwandeln und insbesondere dazu vorgesehen ist, ein Reibmoment zu erzeugen, das größer ist als ein Reibmoment, welches bei einer von der Rückstelldämpfungseinheit entkoppelten Bewegung erzeugt wird. Insbesondere ist das mittels der Rückstelldämpfungseinheit erzeugte Reibmoment zumindest mehr als doppelt so groß als ein bei der von der Rückstelldämpfungseinheit entkoppelten Bewegung, bevorzugt zumindest mehr als vier Mal größer und besonders bevorzugt mehr als sechs Mal größer. Bevorzugt ist eine Größe des mittels der Rückstelldämpfungseinheit erzeugten Reibmoments richtungsabhängig. Vorzugsweise erzeugt die Rückstelldämpfungseinheit in zumindest einem Betriebszustand ein Reibmoment, das zusätzlich zu einem lagerungsbedingten Reibmoment auf den Bedienhebel einwirkt. Bevorzugt ist die Rückstelldämpfungseinheit dazu vorgesehen, bei einer Bewegung der Bedieneinheit, insbesondere bei einer Drehbewegung um zumindest eine Achse, in eine Spannrichtung ein Reibmoment zu erzeugen, das um ein Vielfaches größer ist als ein Reibmoment, das bei einer Bewegung der Bedieneinheit, insbesondere bei einer Drehbewegung um zumindest eine Achse, in eine Löserichtung erzeugt wird. Insbesondere ist das bei einer Bewegung der Bedieneinheit, insbesondere bei einer Drehbewegung um zumindest eine Achse, in die Spannrichtung erzeugte Reibmoment zumindest mehr als doppelt so groß als ein bei der Bewegung der Bedieneinheit, insbesondere bei einer Drehbewegung um zumindest eine Achse, in die Löserichtung erzeugte Reibmoment, bevorzugt zumindest mehr als vier Mal größer und besonders bevorzugt mehr als sechs Mal größer. Unter einer "Spannrichtung" soll hier insbesondere eine Richtung verstanden werden, in die die Bedieneinheit zur Betätigung der Spanneinheit bewegbar ist, wobei infolge der Bewegung der Bedieneinheit mittels der Spanneinheit eine Spannkraft zum Festspannen des Bearbeitungswerkzeugs erzeugt wird. Unter einer "Löserichtung" soll hier insbesondere eine Richtung verstanden werden, in die die Bedieneinheit zur Betätigung der Spanneinheit bewegbar ist, wobei infolge der Bewegung der Bedieneinheit eine durch die Spanneinheit erzeugte Spannkraft gelöst wird. Mittels der erfindungsgemäßen Ausgestaltung der Werkzeugspannvorrichtung kann ein Zurückschnappen der Bedieneinheit in eine Ausgangsstellung nach einem Spannvorgang vorteilhaft vermieden werden. Somit kann vorteilhaft ein hoher Bedienkomfort erreicht werden.

Vorteilhafterweise weist die Rückstelldämpfungseinheit zumindest ein Rückstelldämpfungselement auf, das an einem Übertragungselement der Bedieneinheit angeordnet ist. Bevorzugt ist das Rückstelldämpfungselement als Federelement ausgebildet. In einer alternativen Ausgestaltung ist das Rückstelldämpfungselement als Keilelement ausgebildet. In einer weiteren alternativen Ausgestaltung der erfindungsgemäßen Werkzeugspannvorrichtung ist das Rückstelldämpfungselement bevorzugt als Lagerelement ausgebildet. Es ist jedoch auch denkbar, dass das Rückstelldämpfungselement eine andere, einem Fachmann als sinnvoll erscheinende Ausgestaltung aufweist. Der Begriff "Übertragungselement" soll hier insbesondere ein Element definieren, das dazu vorgesehen ist, Kräfte und/oder Drehmomente von einem Bedienhebel der Bedieneinheit an das Rückstelldämpfungselement zu übertragen und/oder Kräfte und/oder Drehmomente von einem Bedienhebel der Bedieneinheit zur Betätigung der Spanneinheit an die Spanneinheit zu übertragen. Bevorzugt ist das Übertragungselement drehfest mit dem Bedienhebel der Bedieneinheit verbunden. Unter "drehfest verbunden" soll hier insbesondere eine Verbindung verstanden werden, die ein Drehmoment und/oder eine Drehbewegung unverändert überträgt. Es kann vorteilhaft eine kompakte Rückstelldämpfungseinheit erreicht werden.

Ferner wird vorgeschlagen, dass das Rückstelldämpfungselement entlang einer Umfangsrichtung an dem Übertragungselement der Bedieneinheit angeordnet ist. Bevorzugt weist das Rückstelldämpfungselement eine Erstreckung auf, die entlang der Umfangsrichtung verläuft. Somit wird das Übertragungselement vorzugsweise entlang der Umfangsrichtung von dem Rückstelldämpfungselement umschlossen. Besonders bevorzugt umschlingt das Rückstelldämpfungselement das Übertragungselement entlang einem Winkelbereich größer als 60°, bevorzugt größer als 180° und besonders bevorzugt größer als 350° entlang der Umfangsrichtung. Unter einer "Umfangsrichtung" soll hier insbesondere eine Richtung verstanden werden, die zumindest im Wesentlichen in einer Ebene verläuft, die sich zumindest im Wesentlichen senkrecht zur Axialrichtung erstreckt. Es ist jedoch auch denkbar, dass das Rückstelldämpfungselement an einer anderen, einem Fachmann als sinnvoll erscheinenden Stelle angeordnet ist. Vorzugsweise weist das Übertragungselement eine feine Oberflächenstruktur auf. Unter einer "feinen Oberflächenstruktur" soll hier insbesondere eine Oberflächenstruktur verstanden werden, die eine mittlere Rauheit Rₐ aufweist, die kleiner ist als 1 µm. Es kann vorteilhaft ein hoher Wirkungsgrad des Rückstelldämpfungselements zur Dämpfung der Rückstellbewegung der Bedieneinheit erreicht werden.

Vorzugsweise ist das Rückstelldämpfungselement als Schenkelfeder ausgebildet. Unter einer "Schenkelfeder" soll hier insbesondere ein elastisches Bauteil verstanden werden, das vorzugsweise zumindest einen sich tangential zu zumindest einer Windung erstreckenden Schenkel aufweist, der insbesondere als Biegebalken ausgebildet ist, und das vorzugsweise in zumindest einem Betriebszustand um zumindest eine Achse, insbesondere eine zumindest im Wesentlichen parallel zur Axialrichtung verlaufende Achse, auf Torsion beansprucht wird. Bevorzugt weist die Schenkelfeder eine Mehrzahl an Windungen auf, die entlang der Umfangsrichtung das Übertragungselement umschlingen. Besonders bevorzugt weist die Schenkelfeder zumindest zwei Schenkel auf, die sich bevorzugt in Aufnahmeelementen eines Gehäuses einer tragbaren Werkzeugmaschine abstützen. Insbesondere überträgt zumindest ein Schenkel der Schenkelfeder zumindest in einem Betriebszustand Kräfte und/oder Drehmomente an das Gehäuse. Bevorzugt ist zumindest ein Schenkel der Schenkelfeder zur Vorspannung der Schenkelfeder vorgesehen. Es kann konstruktiv einfach ein Rückstelldämpfungselement erreicht werden, insbesondere ein Rückstelldämpfungselement, das vorteilhaft in entgegengesetzt gerichtete Bewegungsrichtungen der Bedieneinheit unterschiedlich große Reibmomente erzeugen kann.

Des Weiteren wird vorgeschlagen, dass das Rückstelldämpfungselement schwenkbar gelagert ist. Bevorzugt ist das Rückstelldämpfungselement relativ zum Übertragungselement schwenkbar gelagert. Hierbei verläuft eine Schwenkachse des Rückstelldämpfungselements vorzugsweise in einem montierten Zustand zumindest im Wesentlichen parallel zur Axialrichtung. Es ist jedoch auch denkbar, dass die Schwenkachse des Rückstelldämpfungselements entlang einer anderen, einem Fachmann als sinnvoll erscheinenden Richtung verläuft. Bevorzugt wird das Rückstelldämpfungselement infolge einer Bewegung des Übertragungselements um die Schwenkachse geschwenkt. Das Rückstelldämpfungselement wirkt bevorzugt direkt und/oder indirekt zur Dämpfung, insbesondere infolge eines Reibmoments, einer Rückstellbewegung der Bedieneinheit auf das Übertragungselement ein. Es kann konstruktiv einfach eine richtungsabhängige Wirkung des Rückstelldämpfungselements erreicht werden.

Vorteilhafterweise weist die Rückstelldämpfungseinheit zumindest ein Federelement auf, das dazu vorgesehen ist, das Rückstelldämpfungselement in zumindest eine Richtung mit einer Federkraft zu beaufschlagen. Bevorzugt ist das Federelement als Zugfeder ausgebildet. Es ist jedoch auch denkbar, dass das Federelement eine andere, einem Fachmann als sinnvoll erscheinende Ausgestaltung aufweist, wie beispielsweise als Druckfeder, als Tellerfeder, als Evolutfeder usw. Das Rückstelldämpfungselement wird vorzugsweise entlang einer Richtung, die zumindest im Wesentlichen senkrecht zur Axialrichtung verläuft, mit einer Federkraft des Federelements beaufschlagt. Besonders bevorzugt wird das Rückstelldämpfungselement entlang der Spannrichtung mit einer Federkraft des Federelements beaufschlagt. Es kann vorteilhaft eine Rückstellkraft erzeugt werden, die dazu vorgesehen ist, das Rückstelldämpfungselement in eine Rückstelldämpfungsposition zu bewegen.

Zudem wird vorgeschlagen, dass die Rückstelldämpfungseinheit zumindest ein Anschlagelement aufweist, das dazu vorgesehen ist, eine Bewegung des Rückstelldämpfungselements in zumindest eine Richtung zu begrenzen. Unter einem "Anschlagelement" soll hier insbesondere ein Element verstanden werden, das dazu vorgesehen ist, eine Bewegungsstrecke eines weiteren Elements entlang zumindest einer Bewegungsrichtung zu begrenzen. Bevorzugt ist das Anschlagelement dazu vorgesehen, eine Bewegungsstrecke des Rückstelldämpfungselements infolge einer durch eine Federkraft des Federelements hervorgerufene Bewegung des Rückstelldämpfungselements und/oder infolge einer durch eine Bewegung der Bedieneinheit in Spannrichtung hervorgerufene Bewegung des Rückstelldämpfungselements zu begrenzen. Somit kann vorteilhaft gewährleistet werden, dass das Rückstelldämpfungselement bei einer Rückstellbewegung der Bedieneinheit in einer für die Dämpfung der Rückstellbewegung der Bedieneinheit erforderlichen Position gesichert ist.

Vorzugsweise ist das Rückstelldämpfungselement als Wälzlager mit Freilauf ausgebildet, das dazu vorgesehen ist, zumindest in eine Drehrichtung eine Drehbewegung zu verhindern. Unter einem "Wälzlager mit Freilauf" soll hier insbesondere ein Wälzlager verstanden werden, das zumindest einen Klemmkörper aufweist, der dazu vorgesehen ist, eine Drehbewegung des Wälzlagers in zumindest eine Drehrichtung zu verhindern und/oder zu sperren. Besonders bevorzugt ist das Gleitlager mit Freilauf dazu vorgesehen, eine Drehbewegung in Spannrichtung zu verhindern und/oder zu sperren. Vorzugsweise liegt das Übertragungselement in einem montierten Zustand entlang der Axialrichtung an einem Innenring des Wälzlagers an. Es kann vorteilhaft ein großes Reibmoment zur Dämpfung einer Rückstellbewegung der Bedieneinheit erreicht werden.

Die Erfindung geht ferner aus von einer tragbaren Werkzeugmaschine, insbesondere von einer tragbaren Werkzeugmaschine mit einer oszillierend antreibbaren Spindel, mit zumindest einer erfindungsgemäßen Werkzeugspannvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Es kann vorteilhaft ein hoher Bedienkomfort für einen Bediener der Werkzeugmaschine erreicht werden.

Die erfindungsgemäße Werkzeugspannvorrichtung soll hierbei nicht auf die oben beschriebene Anwendung und Ausführungsform beschränkt sein. Insbesondere kann die erfindungsgemäße Werkzeugspannvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugspannvorrichtung in einer schematischen Darstellung,
- Fig. 2: eine Detailansicht der erfindungsgemäßen Werkzeugspannvorrichtung in einer schematischen Darstellung,
- Fig. 3: eine weitere Detailansicht der erfindungsgemäßen Werkzeugspannvorrichtung in einer schematischen Darstellung,
- Fig. 4: eine Detailansicht einer alternativen erfindungsgemäße Werkzeugspannvorrichtung in einer schematischen Darstellung,
- Fig. 5: eine weitere Detailansicht der alternativen erfindungsgemäßen Werkzeugspannvorrichtung aus Figur 4 in einem Dämpfungsmodus einer Rückstelldämpfungseinheit der alternativen erfindungsgemäßen Werkzeugspannvorrichtung in einer schematischen Darstellung,
- Fig. 6: eine Detailansicht einer weiteren alternativen erfindungsgemäße Werkzeugspannvorrichtung in einer schematischen Darstellung und
- Fig. 7: eine weitere Detailansicht der weiteren alternativen erfindungsgemäßen Werkzeugspannvorrichtung aus Figur 6 in einem Dämpfungsmodus einer Rückstelldämpfungseinheit der weiteren alternativen erfindungsgemäßen Werkzeugspannvorrichtung in einer schematischen Darstellung.

### Beschreibung der Ausführungsbeispiele

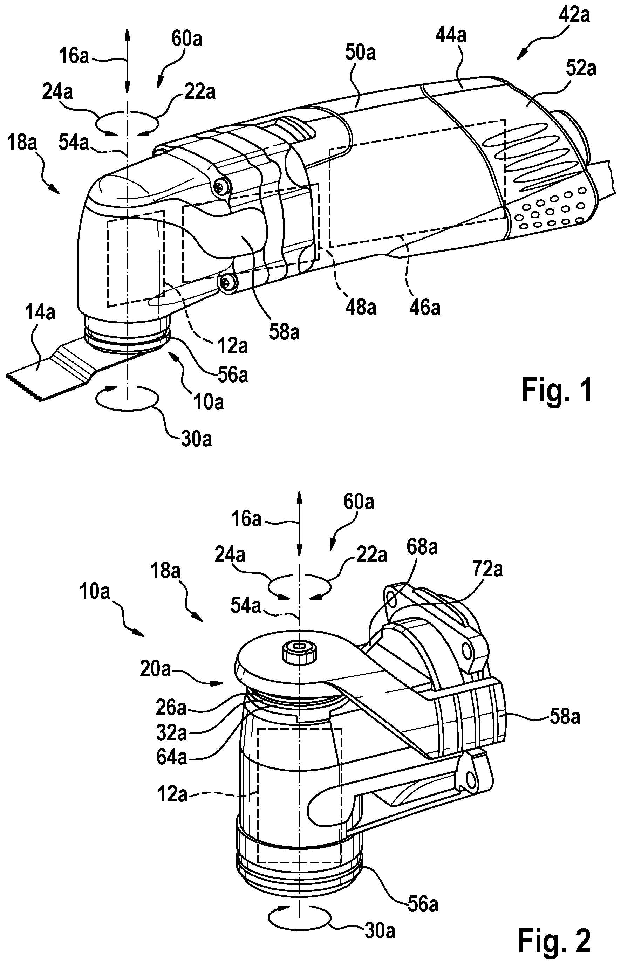

Figur 1 zeigt eine elektrisch betriebene tragbare Werkzeugmaschine 42a mit einer Werkzeugspannvorrichtung 10a. Die tragbare Werkzeugmaschine 42a umfasst ein Werkzeugmaschinengehäuse 44a, das eine Elektromotoreinheit 46a und eine Getriebeeinheit 48a der tragbaren Werkzeugmaschine 42a umschließt. Das Werkzeugmaschinengehäuse 44a umfasst hierbei zwei Gehäusehalbschalen 50a, 52a, die lösbar entlang einer durch eine Axialrichtung 16a verlaufenden Ebene miteinander verbunden sind. Es ist jedoch auch denkbar, dass das Werkzeugmaschinengehäuse 44a zwei oder mehr topfförmige Gehäuseteile aufweist, die lösbar miteinander verbindbar sind. Die Axialrichtung 16a verläuft entlang und/oder parallel zu einer Rotationsachse 54a einer als Spindel ausgebildeten Hohlwelle (hier nicht näher dargestellt) der tragbaren Werkzeugmaschine 42a. Die Hohlwelle ist dazu vorgesehen, in einem montierten Zustand ein Bearbeitungswerkzeug 14a oszillierend anzutreiben. Ein oszillierender Antrieb des Bearbeitungswerkzeugs 14a erfolgt hierbei auf eine, einem Fachmann bereits bekannte Art und Weise, wie beispielsweise mittels eines exzentrisch auf einer Antriebswelle der Elektromotoreinheit 46a angeordneten Zapfens (hier nicht näher dargestellt) der Getriebeeinheit 48a, der mittels einer Schwinge und einer Schwinghülse (hier nicht näher dargestellt) der Getriebeeinheit 48a die Hohlwelle in einem Betrieb der tragbaren Werkzeugmaschine 42a antreibt. Somit ist die als Spindel ausgebildete Hohlwelle oszillierend antreibbar. Das Bearbeitungswerkzeug 14a ist zur spanenden Bearbeitung von Werkstücken an einer Werkzeugaufnahme 56a der tragbaren Werkzeugmaschine 42a befestigbar. Die Werkzeugaufnahme 56a ist mittels einer formschlüssigen und/oder kraftschlüssigen Verbindung drehfest mit der Hohlwelle verbunden. Es ist jedoch auch denkbar, dass die Werkzeugaufnahme 56a einstückig mit der Hohlwelle ausgebildet ist. Es kann somit eine Schwenkbewegung der Hohlwelle auf die Werkzeugaufnahme 56a übertragen werden.

Figur 2 zeigt eine Detailansicht der Werkzeugspannvorrichtung 10a. Die Werkzeugspannvorrichtung 10a umfasst eine Spanneinheit 12a zu einem Festspannen des Bearbeitungswerkzeugs 14a in Axialrichtung 16a und eine Bedieneinheit 18a zur Betätigung der Spanneinheit 12a. Die Bedieneinheit 18a weist einen Bedienhebel 58a auf. Der Bedienhebel 58a ist an einer der Werkzeugaufnahme 56a abgewandten Seite 60a des Werkzeugmaschinengehäuses 44a angeordnet. Ferner ist der Bedienhebel 58a drehbar um die Rotationsachse 54a im Werkzeugmaschinengehäuse 44a gelagert. Der Bedienhebel 58a kann zur Betätigung der Spanneinheit 12a zu einer Erzeugung und/oder zu einem Lösen einer mittels der Spanneinheit 12a erzeugten Spannkraft von einem Bediener betätigt werden.

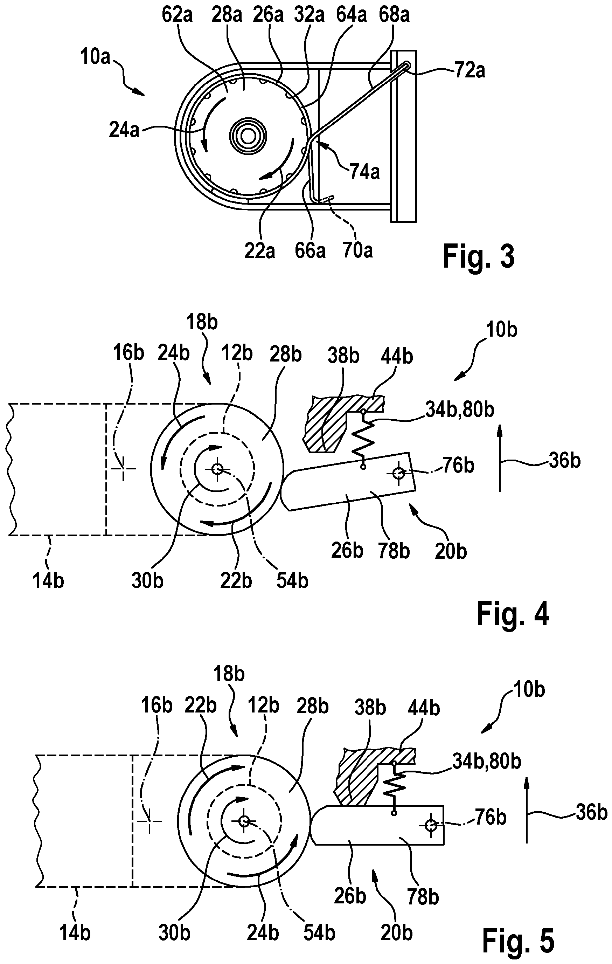

Die Werkzeugspannvorrichtung 10a umfasst ferner eine Rückstelldämpfungseinheit 20a, die dazu vorgesehen ist, eine Rückstellbewegung der Bedieneinheit 18a zu dämpfen. Die Rückstelldämpfungseinheit 20a ist hierbei dazu vorgesehen, in entgegengesetzt gerichtete Bewegungsrichtungen 22a, 24a der Bedieneinheit 18a unterschiedlich große Reibmomente zu erzeugen. Die Rückstelldämpfungseinheit 20a ist, entlang der Axialrichtung 16a betrachtet, zwischen dem Bedienhebel 58a der Bedieneinheit 18a und der Werkzeugaufnahme 56a angeordnet. Ferner weist die Rückstelldämpfungseinheit 20a ein Rückstelldämpfungselement 26a auf, das an einem Übertragungselement 28a der Bedieneinheit 18a angeordnet ist (Figur 3). Das Übertragungselement 28a ist, in einer senkrecht zur Axialrichtung 16a verlaufenden Ebene betrachtet, kreisförmig ausgebildet. Ferner ist das Übertragungselement 28a als Abdeckkappe 62a ausgebildet. Die Abdeckkappe 62a ist topfförmig ausgebildet. Es ist jedoch auch denkbar, dass das Übertragungselement 28a eine andere, einem Fachmann als sinnvoll erscheinende Ausgestaltung aufweist. Hierbei ist die Abdeckkappe 62a mittels einer Schraubverbindung drehfest mit dem Bedienhebel 58a ausgebildet. Es ist jedoch auch denkbar, dass die Abdeckkappe 62a mittels einer anderen, einem Fachmann als sinnvoll erscheinenden Verbindungsart drehfest mit dem Bedienhebel 58a ausgebildet ist, wie beispielsweise mittels einer stoffschlüssigen und/oder formschlüssigen Verbindung.

Das Rückstelldämpfungselement 26a ist entlang einer Umfangsrichtung 30a an dem als Abdeckkappe 62a ausgebildeten Übertragungselement 28a der Bedieneinheit 18a angeordnet. Die Umfangsrichtung 30a verläuft in einer sich senkrecht zur Axialrichtung 16a erstreckenden Ebene. Das Rückstelldämpfungselement 26a umgibt das Übertragungselement 28a entlang der Umfangsrichtung 30a entlang eines Winkelbereichs von 360°. Hierbei ist das Rückstelldämpfungselement 26a als Schenkelfeder 32a ausgebildet. Die Schenkelfeder 32a weist eine Mehrzahl an Windungen 64a auf, die das als Abdeckkappe 62a ausgebildete Übertragungselement 28a in einem Betriebszustand entlang der Umfangsrichtung 30a umschlingen. Die einzelnen Windungen 64a der Schenkelfeder 32a umschlingen das Übertragungselement 28a jeweils um einen Winkel größer als 300°. Ferner weist die Schenkelfeder 32a einen ersten Schenkel 66a und einen zweiten Schenkel 68a auf. Der erste Schenkel 66a und der zweite Schenkel 68a sind jeweils mit einem Ende in Aufnahmeelementen 70a, 72a des Werkzeugmaschinengehäuses 44a angeordnet. Somit sind der erste Schenkel 66a und der zweite Schenkel 68a mit dem Werkzeugmaschinengehäuse 44a verbunden (Figur 3). Der erste Schenkel 66a erstreckt sich tangential von den Windungen 64a weg. Ein Ende des ersten Schenkels 66a ist umgebogen und mündet in einer der Aufnahmeelemente 70a, 72a. Der erste Schenkel 66a ist dazu vorgesehen, Kräfte und/oder Drehmomente auf das Werkzeugmaschinengehäuse 44a zu übertragen. Der zweite Schenkel 68a ist in einem Tangentialbereich 74a gebogen und verläuft ausgehend von der Biegung geradlinig in Richtung einer der Aufnahmeelemente 70a, 72a. Der zweite Schenkel 68a ist dazu vorgesehen, die Schenkelfeder 32a vorzuspannen.

Bei einer Betätigung des Bedienhebels 58a der Bedieneinheit 18a durch einen Bediener in die einer Löserichtung entsprechenden Bewegungsrichtung 22a wird der Bedienhebel 58a um die Rotationsachse 54a gedreht. Hierbei wird das als Abdeckkappe 62a ausgebildete Übertragungselement 28a infolge der drehfesten Verbindung mit dem Bedienhebel 58a mitgedreht. Die entlang der Umfangsrichtung 30a an der Abdeckkappe 62a angeordnete Schenkelfeder 32a wird infolge der Verbindung des ersten Schenkels 66a und des zweiten Schenkels 68a mit dem Werkzeugmaschinengehäuse 44a gegen ein Verdrehen um die Rotationsache 54a gesichert. Bei einer Bewegung des Bedienhebels 58a entlang der der Löserichtung entsprechenden Bewegungsrichtung 22a wirkt infolge einer Reibung zwischen einer dem als Abdeckkappe 62a ausgebildeten Übertragungselement 28a zugewandten Seite der Schenkelfeder 32a und einer der Schenkelfeder 32a zugewandten Seite des Übertragungselements 28a eine Kraft entlang eines Verlaufs der Windungen 64a der Schenkelfeder 32a bzw. ein Drehmoment um die Rotationsachse 54a. Die Schenkelfeder 32a wird hierbei mittels der durch die Reibung resultierenden Kraft bzw. des um die Rotationsachse 54a verlaufenden Drehmoments infolge der verdrehsicheren Verbindung der Schenkelfeder 32a mit dem Werkzeugmaschinengehäuse 44a entlang einer senkrecht zur Axialrichtung 16a verlaufenden Richtung geweitet. Somit wirkt zwischen der Schenkelfeder 32a und dem als Abdeckkappe 62a ausgebildeten Übertragungselement 28a in die der Löserichtung entsprechenden Bewegungsrichtung 22a des Bedienhebels 58a ein kleines Reibmoment.

Der Bedienhebel 58a wird mittels einer Federkraft eines Federelements (hier nicht näher dargestellt) der Spanneinheit 12a beaufschlagt, die den Bedienhebel 58a nach einer Aufhebung einer Krafteinwirkung des Bedieners nach einer Bewegung des Bedienhebels 58a in der der Löserichtung entsprechenden Bewegungsrichtung 22a über einen Mechanismus (hier nicht näher dargestellt) der Bedieneinheit 18a in eine einer Spannrichtung entsprechenden Bewegungsrichtung 24a bewegt. Der Mechanismus der Bedieneinheit 18a ist dazu vorgesehen, eine Rotationsbewegung des Bedienhebels 58a in eine Schwenkbewegung und/oder eine translatorische Bewegung eines Spannelements (hier nicht näher dargestellt) der Spanneinheit 12a zum Festspannen des Bearbeitungswerkzeugs 14a umzuwandeln. Das Spannelement ist hierbei verliersicher in der Hohlwelle der tragbaren Werkzeugmaschine 42a angeordnet. Der Bedienhebel 58a wird infolge der Federkraft um die Rotationsachse 54a gedreht. Das als Abdeckkappe 62a ausgebildete Übertragungselement 28a wird durch die drehfeste Verbindung mit dem Bedienhebel 58a um die Rotationsachse 54a mitgedreht. Bei einer Bewegung des Bedienhebels 58a entlang der der Spannrichtung entsprechenden Bewegungsrichtung 24a wirkt infolge einer Reibung zwischen der dem als Abdeckkappe 62a ausgebildeten Übertragungselement 28a zugewandten Seite der Schenkelfeder 32a und der der Schenkelfeder 32a zugewandten Seite des Übertragungselements 28a eine Kraft entlang eines Verlaufs der Windungen 64a der Schenkelfeder 32a bzw. ein Drehmoment um die Rotationsachse 54a. Die Schenkelfeder 32a wird hierbei mittels der durch die Reibung resultierenden Kraft bzw. des um die Rotationsachse 54a verlaufenden Drehmoments infolge der verdrehsicheren Verbindung der Schenkelfeder 32a mit dem Werkzeugmaschinengehäuse 44a entlang einer senkrecht zur Axialrichtung 16a verlaufenden Richtung zusammengezogen. Somit wirkt zwischen der Schenkelfeder 32a und dem als Abdeckkappe 62a ausgebildeten Übertragungselement 28a in die der Spannrichtung entsprechenden Bewegungsrichtung 24a des Bedienhebels 58a ein Reibmoment erzeugt, das um ein Vielfaches größer ist als ein Reibmoment, das bei einer Bewegung des Bedienhebels 58a entlang der der Löserichtung entsprechenden Bewegungsrichtung 22a erzeugt wird. Hierdurch wird die Rückstellbewegung des Bedienhebels 58a der Bedieneinheit 18a entlang der der Spannrichtung entsprechenden Bewegungsrichtung 24a gedämpft. Das wirkende Reibmoment zwischen der Schenkelfeder 32a und dem Übertragungselement 28a ist abhängig von einem Umschlingungswinkel der Schenkelfeder 32a und/oder von einer Windungszahl der Schenkelfeder 32a und/oder einem Reibungskoeffizient zwischen der Schenkelfeder 32a und dem Übertragungselement 28a.

In den Figuren 4 bis 7 sind zwei alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 3, wobei bezüglich gleich bleibender Bauteile, Merkmale und Funktionen auf die Beschreibung des ersten Ausführungsbeispiels in den Figuren 1 bis 3 verwiesen werden kann.

Figur 4 zeigt eine Detailansicht einer alternativen Werkzeugspannvorrichtung 10b. Die Werkzeugspannvorrichtung 10b ist in einer tragbaren Werkzeugmaschine (hier nicht näher dargestellt) angeordnet, die einen zur tragbaren Werkzeugmaschine 42a aus der Figur 1 analogen Aufbau aufweist. Ferner umfasst die Werkzeugspannvorrichtung 10b eine Spanneinheit 12b zu einem Festspannen eines Bearbeitungswerkzeugs 14b in einer Axialrichtung 16b und eine Bedieneinheit 18b zur Betätigung der Spanneinheit 12b. Des Weiteren weist die Werkzeugspannvorrichtung 10b eine Rückstelldämpfungseinheit 20b auf, die dazu vorgesehen ist, eine Rückstellbewegung der Bedieneinheit 18b zu dämpfen. Die Rückstelldämpfungseinheit 20b ist ferner dazu vorgesehen, in entgegengesetzt gerichtete Bewegungsrichtungen 22b, 24b der Bedieneinheit 18b unterschiedlich große Reibmomente zu erzeugen. Hierbei umfasst die Rückstelldämpfungseinheit 20b ein Rückstelldämpfungselement 26b, das an einem Übertragungselement 28b der Bedieneinheit 18b angeordnet ist. Das Rückstelldämpfungselement 26b ist schwenkbar gelagert. Eine Schwenkachse 76b des Rückstelldämpfungselements 26b verläuft zumindest im Wesentlichen parallel zur Axialrichtung 16b. Das Rückstelldämpfungselement 26b ist als Keilelement 78b ausgebildet. Das Keilelement 78b erstreckt sich entlang einer zumindest im Wesentlichen senkrecht zur Axialrichtung 16b verlaufenden Richtung.

Des Weiteren weist die Rückstelldämpfungseinheit 20b ein Federelement 34b auf, das dazu vorgesehen ist, das Rückstelldämpfungselement 26b in eine Richtung 36b mit einer Federkraft zu beaufschlagen. Das Federelement 34b ist als Zugfeder 80b ausgebildet. Ein Ende der Zugfeder 80b ist mit dem Rückstelldämpfungselement 26b verbunden. Ein weiteres Ende der Zugfeder 80b ist mit einem Werkzeugmaschinengehäuse 44b der tragbaren Werkzeugmaschine verbunden. Ferner umfasst die Rückstelldämpfungseinheit 20b ein Anschlagelement 38b, das dazu vorgesehen ist, eine Bewegung des Rückstelldämpfungselements 26b in die Richtung 36b zu begrenzen. Das Anschlagelement 38b ist einstückig mit dem Werkzeugmaschinengehäuse 44b ausgebildet. Es ist jedoch auch denkbar, dass das Anschlagelement 38b getrennt von dem Werkzeugmaschinengehäuse 44b ausgebildet ist.

Bei einer Betätigung eines drehfest mit dem Übertragungselement 28b verbundenen Bedienhebels (hier nicht näher dargestellt) der Bedieneinheit 18a durch einen Bediener in eine einer Löserichtung entsprechenden Bewegungsrichtung 22b wird das Übertragungselement 28b um eine Rotationsachse 54b gedreht. Das als Keilelement 78b ausgebildete Rückstelldämpfungselement 26b wird hierbei infolge einer Reibung zwischen dem Übertragungselement 28b und dem Keilelement 78b entgegen der Federkraft der Zugfeder 80b der Rückstelldämpfungseinheit 20b weg vom Anschlagelement 38b bewegt. Somit wirkt zwischen dem Keilelement 78b und dem Übertragungselement 28b in die der Löserichtung entsprechenden Bewegungsrichtung 22b des Bedienhebels der Bedieneinheit 18b ein kleines Reibmoment. Die Zugfeder 80b ist dazu vorgesehen, einen Kontaktverlust zwischen dem Übertragungselement 28b und dem Keilelement 78b zu verhindern.

Der Bedienhebel wird mittels einer Federkraft eines Federelements (hier nicht näher dargestellt) der Spanneinheit 12b beaufschlagt, die den Bedienhebel nach einer Aufhebung einer Krafteinwirkung des Bedieners nach einer Bewegung des Bedienhebels in der der Löserichtung entsprechenden Bewegungsrichtung 22b über einen Mechanismus (hier nicht näher dargestellt) der Bedieneinheit 18b in eine einer Spannrichtung entsprechenden Bewegungsrichtung 24a bewegt. Der Mechanismus der Bedieneinheit 18b ist dazu vorgesehen, eine Rotationsbewegung des Bedienhebels in eine Schwenkbewegung und/oder eine translatorische Bewegung eines Spannelements (hier nicht näher dargestellt) der Spanneinheit 12b zum Festspannen des Bearbeitungswerkzeugs 14b umzuwandeln. Der Bedienhebel wird infolge der Federkraft des Federelements der Spanneinheit 12b um die Rotationsachse 54b gedreht. Das Übertragungselement 28b wird durch die drehfeste Verbindung mit dem Bedienhebel um die Rotationsachse 54b mitgedreht (Figur 5). Bei einer Bewegung des Übertragungselements 28b entlang der der Spannrichtung entsprechenden Bewegungsrichtung 24b wird das Keilelement 78b infolge einer Reibung zwischen dem Übertragungselement 28b und dem Keilelement 78b in Richtung des Anschlagelements 38b um die Schwenkachse 76b geschwenkt, bis das Keilelement 78b am Anschlagelement 38b anliegt. Die Schwenkbewegung des Keilelements 78b in Richtung des Anschlagelements 38b wird mittels der Federkraft der Zugfeder 80b unterstützt. Bei einem Anliegen des Keilelements 78b an dem Anschlagelement 38b und einer weiteren Bewegung des Übertragungselements 28b in die der Spannrichtung entsprechende Bewegungsrichtung 24b wird eine Keilwirkung zwischen dem Keilelement 78b und dem Übertragungselement 28b erzeugt. Hierbei wirkt ausgehend von dem Keilelement 78b eine große Normalkraft auf das Übertragungselement 28b ein. Die große Normalkraft erzeugt infolge der Bewegung des Übertragungselements 28b in die der Spannrichtung entsprechenden Bewegungsrichtung 24b ein Reibmoment, das um ein Vielfaches größer ist als ein Reibmoment, das bei einer Bewegung des Bedienhebels entlang der der Löserichtung entsprechenden Bewegungsrichtung 22b erzeugt wird. Hierdurch wird die Rückstellbewegung des Bedienhebels der Bedieneinheit 18b entlang der der Spannrichtung entsprechenden Bewegungsrichtung 24b gedämpft. Das wirkende Reibmoment zwischen dem Keilelement 78b und dem Übertragungselement 28b ist abhängig von einem Reibungskoeffizienten zwischen dem Keilelement 78b und dem Übertragungselement 28b.

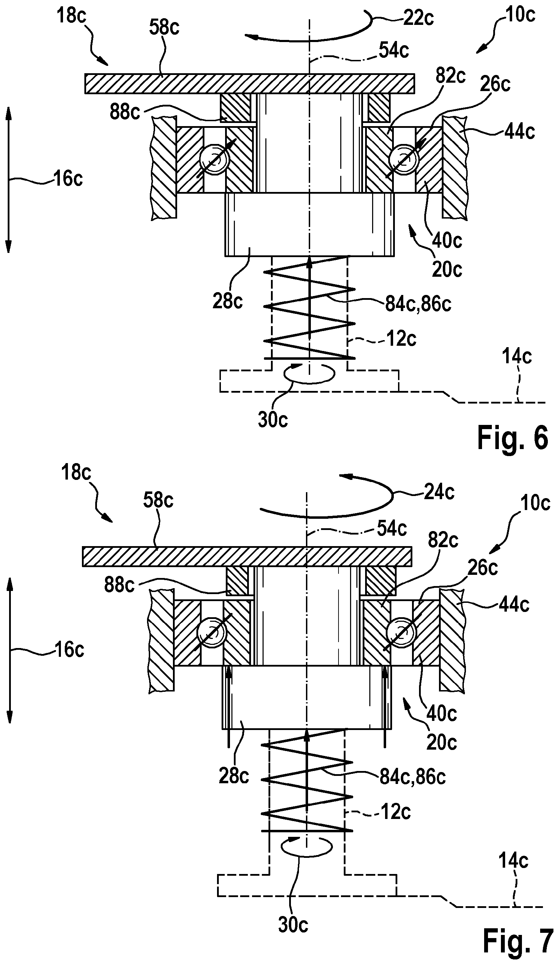

Figur 6 zeigt eine Detailansicht einer weiteren alternativen Werkzeugspannvorrichtung 10c. Die Werkzeugspannvorrichtung 10c ist in einer tragbaren Werkzeugmaschine (hier nicht näher dargestellt) angeordnet, die einen zur tragbaren Werkzeugmaschine 42a aus der Figur 1 analogen Aufbau aufweist. Ferner umfasst die Werkzeugspannvorrichtung 10c eine Spanneinheit 12c zu einem Festspannen eines Bearbeitungswerkzeugs 14c in einer Axialrichtung 16c und eine Bedieneinheit 18c zur Betätigung der Spanneinheit 12c. Des Weiteren weist die Werkzeugspannvorrichtung 10c eine Rückstelldämpfungseinheit 20c auf, die dazu vorgesehen ist, eine Rückstellbewegung der Bedieneinheit 18c zu dämpfen. Die Rückstelldämpfungseinheit 20c ist ferner dazu vorgesehen, in entgegengesetzt gerichtete Bewegungsrichtungen 22c, 24c der Bedieneinheit 18c unterschiedlich große Reibmomente zu erzeugen. Hierbei umfasst die Rückstelldämpfungseinheit 20c ein Rückstelldämpfungselement 26c, das an einem Übertragungselement 28c der Bedieneinheit 18c angeordnet ist. Das Rückstelldämpfungselement 26c ist als Wälzlager 40c mit Freilauf ausgebildet, das dazu vorgesehen ist, zumindest in eine Bewegungsrichtung 22c, 24c eine Drehbewegung zu verhindern. Hierbei ist das Übertragungselement 28c entlang einer im Wesentlichen senkrecht zur Axialrichtung 16c verlaufenden Richtung beabstandet zum Wälzlager 40c angeordnet. Das Übertragungselement 28c liegt in einem montierten Zustand entlang der Axialrichtung 16c an einem Innenring 82c des Wälzlagers 40c an. Das Wälzlager 40c weist eine, einem Fachmann bereits bekannte Sperreinheit (hier nicht näher dargestellt) auf, die dazu vorgesehen ist, eine Drehbewegung des Wälzlagers 40c und/oder des Innenrings 82c in die Bewegungsrichtung 24c zu sperren. Eine Drehbewegung des Wälzlagers 40c und/oder des Innenrings 82c um die Rotationsachse 54c wird mittels der Sperreinheit verhindert.

Bei einer Betätigung eines drehfest mit dem Übertragungselement 28c verbundenen Bedienhebels 58c der Bedieneinheit 18c durch einen Bediener in eine einer Löserichtung entsprechenden Bewegungsrichtung 22c wird das Übertragungselement 28c um eine Rotationsachse 54c gedreht. Zwischen dem Bedienhebel 58c und dem Wälzlager 40c ist, entlang der Axialrichtung 16c betrachtet, eine Distanzhülse 88c angeordnet. Durch das Anliegen des Übertragungselements 28c entlang der Axialrichtung 16c am Innenring 82c des Wälzlagers 40c wird der Innenring 82c mit dem Übertragungselement 28c um die Rotationsachse 54c mitgedreht. Somit wirkt zwischen dem Innenring 82c des Wälzlagers 40c und dem Übertragungselement 28c in die der Löserichtung entsprechenden Bewegungsrichtung 22c des Bedienhebels 58c der Bedieneinheit 18c ein kleines Reibmoment.

Der Bedienhebel 58c wird mittels einer Federkraft eines als Druckfeder 86c ausgebildeten Federelements 84c der Spanneinheit 12c beaufschlagt, die den Bedienhebel 58c nach einer Aufhebung einer Krafteinwirkung des Bedieners nach einer Bewegung des Bedienhebels 58c in der der Löserichtung entsprechenden Bewegungsrichtung 22c über einen Mechanismus (hier nicht näher dargestellt) der Bedieneinheit 18c in eine einer Spannrichtung entsprechenden Bewegungsrichtung 24c bewegt. Der Mechanismus der Bedieneinheit 18c ist dazu vorgesehen, eine Rotationsbewegung des Bedienhebels 58c in eine Schwenkbewegung und/oder eine translatorische Bewegung eines Spannelements (hier nicht näher dargestellt) der Spanneinheit 12c zum Festspannen des Bearbeitungswerkzeugs 14c umzuwandeln. Der Bedienhebel 58c wird infolge der Federkraft des Federelements 84c der Spanneinheit 12c um die Rotationsachse 54c gedreht. Das Übertragungselement 28c wird durch die drehfeste Verbindung mit dem Bedienhebel 58c um die Rotationsachse 54c mitgedreht (Figur 7). Das Wälzlager 40c und/oder der Innenring 82c wird mittels der Sperreinheit des Wälzlagers 40c an einem Mitdrehen entlang der Bewegungsrichtung 24c um die Rotationsachse 54c gehindert. Das Übertragungselement 28c wird durch das Federelement 84c mit einer Federkraft in Richtung des Wälzlagers 40c beaufschlagt. Hierdurch wird das Übertragungselement 28c gegen den Innenring 82c gedrückt. Infolge des Andrückens des Übertragungselements 28c an den Innenring 82c und eine mittels der Sperreinheit verhinderte Drehbewegung des Innenrings 82c entlang der Bewegungsrichtung 24c wird bei einer Drehbewegung des Übertragungselements 28c um die Rotationsachse 54c ein Reibmoment zwischen dem Übertragungselement 28c und dem Innenring 82c erzeugt, das um ein Vielfaches größer ist als ein Reibmoment, das bei einer Bewegung des Bedienhebels 58c entlang der der Löserichtung entsprechenden Bewegungsrichtung 22c erzeugt wird. Hierdurch wird die Rückstellbewegung des Bedienhebels 58c der Bedieneinheit 18c entlang der der Spannrichtung entsprechenden Bewegungsrichtung 24c gedämpft. Das wirkende Reibmoment zwischen dem Innenring 82c und dem Übertragungselement 28c ist abhängig von einem Reibungskoeffizienten zwischen dem Innenring 82c und dem Übertragungselement 28c. Das wirkende Reibmoment kann zusätzlich mittels einer alternativ zur Distanzhülse 88c zwischen dem Bedienhebel 58c und dem Wälzlager 40c angeordneten vorgespannten Tellerfeder erhöht werden.

## Patentansprüche

1. Werkzeugspannvorrichtung, insbesondere Oszillationswerkzeugspannvorrichtung, mit zumindest einer Spanneinheit (12a; 12b; 12c) zu einem Festspannen eines Bearbeitungswerkzeugs (14a; 14b; 14c) in einer Axialrichtung (16a; 16b; 16c), mit zumindest einer Bedieneinheit (18a; 18b; 18c) zur Betätigung der Spanneinheit (12a; 12b; 12c), und mit zumindest einer Rückstelldämpfungseinheit (20a; 20b; 20c), die dazu vorgesehen ist, eine Rückstellbewegung der Bedieneinheit (18a; 18b; 18c) zumindest zu dämpfen, **dadurch gekennzeichnet, dass** die Rückstelldämpfungseinheit (20a; 20b; 20c) dazu vorgesehen ist, in entgegengesetzt gerichtete Bewegungsrichtungen (22a, 24a; 22b, 24b; 22c, 24c) der Bedieneinheit (18a; 18b; 18c) unterschiedlich große Reibmomente zu erzeugen.

2. Werkzeugspannvorrichtung nach Anspruch 1,
**dadurch gekennzeichnet, dass** die Rückstelldämpfungseinheit (20a; 20b; 20c) zumindest ein Rückstelldämpfungselement (26a; 26b; 26c) aufweist, das an einem Übertragungselement (28a; 28b; 28c) der Bedieneinheit (18a; 18b; 18c) angeordnet ist.

3. Werkzeugspannvorrichtung nach Anspruch 2,
**dadurch gekennzeichnet, dass** das Rückstelldämpfungselement (26a; 26c) entlang einer Umfangsrichtung (30a; 30c) an dem Übertragungselement (28a; 28c) der Bedieneinheit (18a; 18c) angeordnet ist.

4. Werkzeugspannvorrichtung nach Anspruch 2 oder 3,
**dadurch gekennzeichnet, dass** das Rückstelldämpfungselement (26a) als Schenkelfeder (32a) ausgebildet ist.

5. Werkzeugspannvorrichtung zumindest nach Anspruch 2,
**dadurch gekennzeichnet, dass** das Rückstelldämpfungselement (26b) schwenkbar gelagert ist.

6. Werkzeugspannvorrichtung nach Anspruch 5,
**dadurch gekennzeichnet, dass** die Rückstelldämpfungseinheit (20b) zumindest ein Federelement (34b) aufweist, das dazu vorgesehen ist, das Rückstelldämpfungselement (26b) in zumindest eine Richtung (36b) mit einer Federkraft zu beaufschlagen.

7. Werkzeugspannvorrichtung nach Anspruch 5 oder 6,
**dadurch gekennzeichnet, dass** die Rückstelldämpfungseinheit (20b) zumindest ein Anschlagelement (38b) aufweist, das dazu vorgesehen ist, eine Bewegung des Rückstelldämpfungselements (26b) in zumindest eine Richtung (36b) zu begrenzen.

8. Werkzeugspannvorrichtung zumindest nach Anspruch 2,
**dadurch gekennzeichnet, dass** das Rückstelldämpfungselement (26c) als Wälzlager (40c) mit Freilauf ausgebildet ist, das dazu vorgesehen ist, zumindest in eine Bewegungsrichtung (22c, 24c) eine Drehbewegung zu verhindern.

9. Tragbare Werkzeugmaschine, insbesondere tragbare Werkzeugmaschine mit einer oszillierend antreibbaren Spindel, mit zumindest einer Werkzeugspannvorrichtung nach einem der vorhergehenden Ansprüche.

## Claims

1. Tool clamping fixture, in particular oscillation tool clamping fixture, having at least one clamping unit (12a; 12b; 12c) for clamping a machining tool (14a; 14b; 14c) in an axial direction (16a; 16b; 16c), having at least one control unit (18a; 18b; 18c) for actuating the clamping unit (12a; 12b; 12c), and having at least one return damping unit (20a; 20b; 20c), which is provided to at least damp a return motion of the control unit (18a; 18b; 18c),
**characterized in that** the return damping unit (20a; 20b; 20c) is provided to generate friction torques of different magnitude in oppositely directed motional directions (22a, 24a; 22b, 24b; 22c, 24c) of the control unit (18a; 18b; 18c).

2. Tool clamping fixture according to Claim 1, **characterized in that** the return damping unit (20a; 20b; 20c) has at least one return damping element (26a; 26b; 26c), which is disposed on a transmission element (28a; 28b; 28c) of the control unit (18a; 18b; 18c).

3. Tool clamping fixture according to Claim 2, **characterized in that** the return damping element (26a; 26c) is disposed along a peripheral direction (30a; 30c) on the transmission element (28a; 28c) of the control unit (18a; 18c).

4. Tool clamping fixture according to Claim 2 or 3, **characterized in that** the return damping element (26a) is configured as a leg spring (32a).

5. Tool clamping fixture according to Claim 2, **characterized in that** the return damping element (26b) is pivotably mounted.

6. Tool clamping fixture according to Claim 5, **characterized in that** the return damping unit (20b) has at least one spring element (34b), which is provided to subject the return damping element (26b) to a spring force in at least one direction (36b).

7. Tool clamping fixture according to Claim 5 or 6, **characterized in that** the return damping unit (20b) has at least one stop element (38b), which is provided to limit a motion of the return damping element (26b) in at least one direction (36b) .

8. Tool clamping fixture at least according to Claim 2,
**characterized in that** the return damping element (26c) is configured as a freewheeling roller bearing (40c), which is provided to prevent a rotary motion at least in one motional direction (22c, 24c) .

9. Portable machine tool, in particular a portable machine tool having an oscillatingly drivable spindle, having at least one tool clamping fixture according to one of the preceding claims.

## Revendications

1. Dispositif de serrage d'outil, en particulier dispositif de serrage d'outil oscillant, comprenant au moins une unité de serrage (12a ; 12b ; 12c) pour un serrage d'un outil d'usinage (14a ; 14b ; 14c) dans une direction axiale (16a ; 16b ; 16c), comprenant au moins une unité de commande (18a ; 18b ; 18c) pour l'actionnement de l'unité de serrage (12a ; 12b ; 12c), et comprenant au moins une unité d'amortissement de rappel (20a ; 20b ; 20c), qui est prévue pour au moins amortir un mouvement de rappel de l'unité de commande (18a ; 18b ; 18c), **caractérisé en ce que** l'unité d'amortissement de rappel (20a ; 20b ; 20c) est prévue pour générer des couples de friction de puissances différentes dans des directions de mouvement opposées (22a, 24a ; 22b, 24b ; 22c, 24c) de l'unité de commande (18a ; 18b ; 18c).

2. Dispositif de serrage d'outil selon la revendication 1, **caractérisé en ce que** l'unité d'amortissement de rappel (20a ; 20b ; 20c) présente au moins un élément d'amortissement de rappel (26a ; 26b ; 26c) qui est disposé au niveau d'un élément de transmission (28a ; 28b ; 28c) de l'unité de commande (18a ; 18b ; 18c).

3. Dispositif de serrage d'outil selon la revendication 2, **caractérisé en ce que** l'élément d'amortissement de rappel (26a ; 26c) est disposé le long d'une direction périphérique (30a ; 30c) sur l'élément de transmission (28a ; 28c) de l'unité de commande (18a ; 18c).

4. Dispositif de serrage d'outil selon la revendication 2 ou 3, **caractérisé en ce que** l'élément d'amortissement de rappel (26a) est réalisé sous forme de ressort à branches (32a).

5. Dispositif de serrage d'outil selon au moins la revendication 2, **caractérisé en ce que** l'élément d'amortissement de rappel (26b) est supporté de manière pivotante.

6. Dispositif de serrage d'outil selon la revendication 5, **caractérisé en ce que** l'unité d'amortissement de rappel (20b) présente au moins un élément de ressort (34b) qui est prévu pour solliciter l'élément d'amortissement de rappel (26b) dans au moins une direction (36b) avec une force de ressort.

7. Dispositif de serrage d'outil selon la revendication 5 ou 6, **caractérisé en ce que** l'unité d'amortissement de rappel (20b) présente en outre au moins un élément de butée (38b) qui est prévu pour limiter un mouvement de l'élément d'amortissement de rappel (26b) dans au moins une direction (36b).

8. Dispositif de serrage d'outil au moins selon la revendication 2, **caractérisé en ce que** l'élément d'amortissement de rappel (26c) est réalisé en tant que palier à roulement (40c) à roue libre, qui est prévu pour empêcher un mouvement de rotation dans au moins dans une direction de mouvement (22c, 24c).

9. Machine-outil portative, en particulier machine-outil portative comprenant une broche pouvant être entraînée en oscillation, comprenant au moins un dispositif de serrage d'outil selon l'une quelconque des revendications précédentes.
